(19) Europäisches Patentamt
European Patent Office
Office européen des brevets

(11) **EP 2 559 743 A1**

(12) **EUROPEAN PATENT APPLICATION**
published in accordance with Art. 153(4) EPC

(43) Date of publication:
**20.02.2013 Bulletin 2013/08**

(21) Application number: **11768932.3**

(22) Date of filing: **14.04.2011**

(51) Int Cl.:
***C09D 127/18*** (2006.01)   ***C09D 5/33*** (2006.01)
***C09D 7/12*** (2006.01)   ***C09D 123/08*** (2006.01)
***F24J 2/10*** (2006.01)

(86) International application number:
**PCT/JP2011/059305**

(87) International publication number:
**WO 2011/129411 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2010 JP 2010095370**

(71) Applicant: **Asahi Glass Company, Limited
Tokyo 100-8405 (JP)**

(72) Inventors:
• **MASUDA, Shou
Tokyo 100-8405 (JP)**

• **NAKANO, Takashi
Tokyo 100-8405 (JP)**
• **SHIROTA, Naoko
Tokyo 100-8405 (JP)**
• **SAITO, Shun
Tokyo 100-8405 (JP)**

(74) Representative: **Müller-Boré & Partner
Patentanwälte
Grafinger Straße 2
81671 München (DE)**

(54) **COATING COMPOSITION FOR COATING SURFACE OF REFLECTIVE PLATE FOR SOLAR HEAT COLLECTION PURPOSES, REFLECTIVE PLATE FOR SOLAR HEAT COLLECTION PURPOSES, AND PROCESSES FOR PRODUCTION OF THE COATING COMPOSITION AND THE REFLECTIVE PLATE**

(57)   To provide a coating composition capable of forming a coating film having excellent functions on the surface of a solar heat-collecting reflective plate, and a solar heat-collecting reflective plate obtainable by such a composition, as well as processes for their production. A coating composition for coating the surface of a solar heat-collecting reflective plate, which comprises a fluorinated copolymer having repeating units derived from ethylene and repeating units derived from tetrafluoroethylene, and a solvent capable of dissolving the fluorinated copolymer at a temperature of not higher than the melting point of the fluorinated copolymer; a solar heat-collecting reflective plate obtainable by such a composition; and processes for producing such a composition and a reflective plate.

EP 2 559 743 A1

**Description**

TECHNICAL FIELD

The present invention relates to a coating composition for coating the surface of a solar heat-collecting reflective plate, and a solar heat-collecting reflective plate, as well as processes for their production.

BACKGROUND ART

In recent years, from the viewpoint of global environment problems, there have been many attempts to suppress use of fossil fuels, and as one of them, a solar heat-collecting system which utilizes solar heat is known. As such a solar heat-collecting system, for example, a system may be mentioned which comprises a heat collection tube provided with a heat medium such as water or an inorganic salt, and a reflective plate to reflect sunlight to collect it in the heat collection tube. In such a solar heat-collecting system, sunlight is reflected by the reflective plate and collected in the heat collection tube, and the heat medium in the heat collection tube is heated by the heat of such sunlight to obtain thermal energy.

As the solar heat-collecting reflective plate to reflect sunlight in such a solar heat-collecting system, (1) a solar heat-collecting reflective plate wherein the reflective substrate is a metal substrate made of aluminum, an aluminum alloy, stainless steel, etc. in which a mirror-finished surface is formed on the light-incoming/outgoing surface (hereinafter "the light-incoming/outgoing surface" will be referred to simply as "the incoming/outgoing surface") side of the metal substrate, or in which a reflective metal layer is formed on the incoming/outgoing surface side of the metal substrate, and (2) a solar heat-collecting reflective plate so-called a reflecting mirror, wherein the reflective substrate is a substrate comprising a glass substrate and a reflective metal layer formed on the opposite side of the incoming/outgoing surface of the glass substrate, have been widely used.

The solar heat-collecting reflective plate (1) is used outdoors, and therefore, a coating film is formed on the incoming/outgoing surface side for the purpose of maintaining a high reflectance for a long period of time. For example, the following solar heat-collecting reflective plates are known.

(1-i) A solar heat-collecting reflective plate having a coating film formed by applying a tetrafluoroethylene/hexafluoropropylene copolymer on a reflective substrate made of aluminum or an aluminum alloy (Patent Document 1).
(1-ii) A solar heat-collecting reflective plate having a coating film made of a sol-gel lacquer of polysiloxane formed on a reflective substrate made of aluminum or an aluminum alloy (Patent Document 2).

Like the solar heat-collecting reflective plate (1-i) or (1-ii), a solar heat-collecting reflective plate (1) having a coating film is used as exposed in a severe environment of e.g. desert areas for a long period of time and is likely to have the following problems.

(a) The coating film is peeled from the reflective substrate by expansion or shrinkage due to heat or by expansion due to moisture absorption or water absorption of the coating film.
(b) The reflective substrate made of metal is oxidized by moisture, water, etc. passing through the coating film, whereby the reflectance at the incoming/outgoing surface deteriorates.
(c) The incoming/outgoing surface of the reflective substrate made of metal is damaged by impingement of sand, etc., whereby the reflectance deteriorates.
(d) The coating film is deteriorated by sunlight.

Therefore, the coating film of the solar heat-collecting reflective plate (1) is required to be excellent in durability such as heat resistance, moisture resistance, water resistance, etc. in order to solve the problems (a) and (b), to be excellent in scratch resistance and impact resistance in order to solve the problem (c), and to be excellent in weather resistance in order the solve the problem (d).

However, with the coating film of the solar heat-collecting reflective plate (1-i) or (1-ii), it is difficult to sufficiently increase the durability, such as heat resistance, moisture resistance, water resistance, etc., weather resistance, scratch resistance and impact resistance. Especially, the incoming/outgoing surface side of the solar heat-collecting reflective plate is heated to a high temperature, and it is difficult to impart to the coating film sufficient heat resistance to be durable under such high temperature conditions. Further, it is also difficult to impart scratch resistance and impact resistance to the coating film in the solar heat-collecting reflective plate (1-i) or (1-ii) so that deterioration by impingement of sand, etc. can be prevented for a long period of time. Further, in a case where the surface opposite to the incoming/outgoing surface (hereinafter "the surface opposite to the incoming/outgoing surface" will be referred to simply as "non-incoming/outgoing surface") of the reflective substrate made of metal is exposed, the solar heat-collecting reflective plate (1) is required to have protection also with respect to the non-incoming/outgoing surface side like the incoming/outgoing surface side by increasing the durability, weather resistance, scratch resistance and impact resistance.

In the solar heat-collecting reflective plate (1-i), a tetrafluoroethylene/hexafluoropropylene copolymer is used as the coating film. The tetrafluoroethylene/hexafluoropropylene copolymer has excellent resistance and weather resistance, and its water absorptivity is low, and it is, therefore, considered to be suitable as a material as a coating film to protect the incoming/outgoing surface of the reflective substrate. However, the tetrafluoroethylene/hexafluoropropylene copolymer has a color of white to milky white, and the coating film surface is susceptible to scratching, and therefore, the reflectance of the reflective plate tends to be low. Further, such a copolymer has a very high content of fluorine atoms and further has a $CF_3$ group, whereby it is poor in the adhesion to the reflective substrate, and such a copolymer is likely to be peeled from the reflective substrate during exposure for a long period of time. Therefore, for the purpose of improving the adhesion to the reflective substrate, such a copolymer is used as mixed with a silicon resin. However, the adhesion between the reflective substrate and the copolymer, and the weather resistance have been still not sufficient.

In the solar heat-collecting reflective plate (1-ii), a sol-gel lacquer of polysiloxane is used as a coating film. The sol-gel lacquer of polysiloxane has excellent heat resistance and scratch resistance, but the weather resistance is poor, and the coating film is likely to be deteriorated during use for a long period of time, and the reflectance of the reflective plate is likely to be deteriorated.

On the other hand, the solar heat-collecting reflective plate (2) is also used outdoors for a long period of time, and therefore it is required to have various functions as is different from a usual mirror to be used indoors. As a mirror to be used indoors, for example, as shown below, a mirror having a coating film (back coating film) on at least one surface side, particularly the non-incoming/outgoing surface side, of the reflective substrate, is widely used.

(3) A mirror comprising a glass substrate, a reflective metal layer formed on the glass substrate, and a coating film formed on the reflective metal layer, wherein the coating film is a coating film comprising a molybdenum compound as a lead-free pigment and a synthetic resin binder (Patent Document 3).

(4) A mirror comprising a glass substrate, a reflective metal layer formed on the glass substrate, and a coating film formed on the reflective metal layer, wherein the coating film is a coating film comprising a metal salt such as a thiazole type metal salt, an azole type or diamine type compound, and a synthetic resin (Patent Document 4).

In the mirrors (3) and (4), corrosion and degradation of the reflective metal layer are prevented by the glass substrate and the coating film.

The coating film on the incoming/outgoing surface side of the mirror (3) or (4) is advantageous from the environmental aspect, since it contains substantially no lead-type pigment. However, no consideration is made about a severe environment such that it is exposed outdoors for a long period of time. Therefore, if the mirror (3) or (4) is employed as a solar heat-collecting reflective plate (2), there will be the same problems as described with respect to the solar heat-collecting reflective plate (1), when it is used outdoors for a long period of time. Therefore, excellent durability, weather resistance, scratch resistance and impact resistance are required also for the coating film on the incoming/outgoing surface side of the solar heat-collecting reflective plate (2).

As mentioned above, the coating film to protect the reflective substrate of a solar heat-collecting reflective plate is required to have excellent functions durable against use for a long period of time, but it is difficult to form a coating film which satisfies such functions.

PRIOR ART DOCUMENTS

PATENT DOCUMENTS

Patent Document 1: JP-A-58-64452
Patent Document 2: JP-A-2003-532925
Patent Document 3: JP-A-2007-45849
Patent Document 4: JP-A-10-33333

DISCLOSURE OF INVENTION

TECHNICAL PROBLEM

It is an object of the present invention to provide a coating composition for coating the surface of a solar heat-collecting reflective plate, which is capable of forming a coating film excellent in durability such as heat resistance, water resistance, etc. and also excellent in weather resistance, scratch resistance and impact resistance, as a coating film to protect the surface of a reflective substrate of a solar heat-collecting reflective plate, and a process for its production.

Further, it is another object of the present invention to provide a solar heat-collecting reflective plate having a coating film excellent in durability such as heat resistance, water resistance, etc. and also excellent in weather resistance, scratch resistance and impact resistance, and a process for its production.

SOLUTION TO PROBLEM

The present invention has adopted the following constructions to accomplish the above objects.

[1] A coating composition for coating the surface of a solar heat-collecting reflective plate, which comprises a fluorinated copolymer having repeating units derived from ethylene and repeating units derived from tetrafluoroethylene, and a solvent capable of dissolving the fluorinated copolymer at a temperature of not higher than the melting point of the fluorinated copolymer.

[2] The coating composition for coating the surface of a solar heat-collecting reflective plate according to the above [1], wherein the proportion of repeating units derived from monomers other than ethylene and tetrafluoroethylene in all repeating units in the fluorinated copolymer, is from 0.1 to 30 mol%.

[3] The coating composition for coating the surface of a solar heat-collecting reflective plate according to the above [1] or [2], wherein the fluorinated copolymer is a fluorinated copolymer having crosslinkable groups.

[4] The coating composition for coating the surface of a solar heat-collecting reflective plate according to any one of the above [1] to [3], wherein the solvent is made of a fluorinated aromatic compound.

[5] The coating composition for coating the surface of a solar heat-collecting reflective plate according to any one of the above [1] to [3], wherein the solvent is made of a hydrofluoroether or a hydrofluorocarbon.

[6] The coating composition for coating the surface of a solar heat-collecting reflective plate according to any one of the above [1] to [3], wherein the solvent is made of an aliphatic compound having at least one of a carbonyl group and a nitrile group.

[7] The coating composition for coating the surface of a solar heat-collecting reflective plate according to any one of the above [1] to [6], wherein the content of fluorine atoms in the solvent is from 5 to 75 mass%.

[8] A process for producing a coating composition for coating the surface of a solar heat-collecting reflective plate, which comprises a dissolving step of dissolving a fluorinated copolymer having repeating units derived from ethylene and repeating units derived from tetrafluoroethylene in a solvent capable of dissolving the fluorinated copolymer at a temperature of not higher than the melting point of the fluorinated copolymer.

[9] The process for producing a coating composition for coating the surface of a solar heat-collecting reflective plate according to the above [8], wherein the dissolution temperature in the dissolving step is a temperature lower by at least 30°C than the melting point of the fluorinated copolymer.

[10] A process for producing a solar heat-collecting reflective plate, which comprises applying the coating composition for coating the surface of a solar heat-collecting reflective plate as defined in any one of the above [1] to [7] on at least one surface side of a reflective substrate made of metal to form an applied layer, followed by drying to form a coating film.

[11] A solar heat-collecting reflective plate which comprises a reflective substrate made of metal and a coating film provided on at least one surface side of the reflective substrate, wherein the coating film is a coating film formed from the composition for coating the surface of a solar heat-collecting reflective plate as defined in any one of the above [1] to [7].

[12] The solar heat-collecting reflective plate according to the above [11], wherein the reflective substrate made of metal is a metal substrate made of aluminum or an aluminum alloy, of which the light-incoming/outgoing surface side is mirror-finished, or in which a reflective metal layer is formed on the light-incoming/outgoing surface side of the metal substrate.

[13] A process for producing a solar heat-collecting reflective plate, which comprises applying the coating composition for coating the surface of a solar heat-collecting reflective plate as defined in any one of the above [1] to [7] on at least one surface side of a reflective substrate comprising a glass substrate and a reflective metal layer provided on the opposite side of a light-incoming/outgoing surface of the glass substrate, to form an applied layer, followed by drying to form a coating film.

[14] A solar heat-collecting reflective plate which comprises a reflective substrate comprising a glass substrate and a reflective metal layer provided on the opposite side of a light-incoming/outgoing surface of the glass substrate, and a coating film provided on at least one surface side of the reflective substrate, wherein the coating film is a coating film formed from the coating composition for coating the surface of a solar heat-collecting reflective plate as defined in any one of the above [1] to [7].

[15] The solar heat-collecting reflective plate according to the above [14], wherein the reflective metal layer is made of silver.

ADVANTAGEOUS EFFECTS OF INVENTION

By using the coating composition for coating the surface of a solar heat-collecting reflective plate of the present invention, it is possible to form a coating film excellent in durability such as heat resistance, water resistance, etc. and also excellent in weather resistance, scratch resistance and impact resistance, as a coating film to protect the surface of a reflective substrate of a solar heat-collecting reflective plate.

Further, according to the process for producing a coating composition for coating the surface of a solar heat-collecting reflective plate of the present invention, it is possible to obtain a composition capable of forming a coating film excellent in durability such as heat resistance, water resistance, etc. and also excellent in weather resistance, scratch resistance and impact resistance, as a coating film to protect the surface of a reflective substrate of a solar heat-collecting reflective plate.

Further, the solar heat-collecting reflective plate of the present invention has a coating film excellent in durability such as heat resistance, water resistance, etc. and also excellent in weather resistance, scratch resistance and impact resistance.

Further, according to the process for producing a solar heat-collecting reflective plate of the present invention, it is possible to obtain a solar heat-collecting reflective plate having a coating film excellent in durability such as heat resistance, water resistance, etc. and also excellent in weather resistance, scratch resistance and impact resistance.

BRIEF DESCRIPTION OF DRAWINGS

Fig. 1 is a cross-sectional view illustrating an embodiment of the solar heat-collecting reflective plate of the present invention.
Fig. 2 is a cross-sectional view illustrating another embodiment of the solar heat-collecting reflective plate of the present invention.
Fig. 3 is a cross-sectional view illustrating another embodiment of the solar heat-collecting reflective plate of the present invention.
Fig. 4 is a cross-sectional view illustrating another embodiment of the solar heat-collecting reflective plate of the present invention.

DESCRIPTION OF EMBODIMENTS

<Coating composition for coating the surface of solar heat-collecting reflective plate>

The coating composition for coating the surface of a solar heat-collecting reflective plate (hereinafter referred to simply as "the coating composition") of the present invention is a coating composition to form a coating film by applying it on at least one surface side of a reflective substrate of a solar heat-collecting reflective plate to form an applied layer, followed by drying.

The coating composition of the present invention may be used for each of the solar heat-collecting reflective plate (1) wherein the reflective substrate is a substrate made of metal, and the solar heat-collecting reflective plate (2) wherein the reflective substrate is a substrate comprising a glass substrate and a reflective metal layer formed on the opposite side of the incoming/outgoing surface of the glass substrate. In a case where the coating composition of the present invention is used for the solar heat-collecting reflective plate (1), it is preferably used as a coating composition to be applied on the incoming/outgoing surface side of a reflective substrate where a coating film excellent particularly in durability such as heat resistance, water resistance, etc., weather resistance, scratch resistance and impact resistance, is required. However, the coating composition of the present invention may be used as a coating composition to be applied on the non-incoming/outgoing surface side of a reflective substrate of the solar heat-collecting reflective plate (1).

Further, in a case where the coating composition of the present invention is used for the solar heat-collecting reflective plate (2), it may be used as a coating composition to be applied on the glass substrate side of a reflective substrate or on the reflective metal layer side of the reflective substrate.

The coating composition of the present invention comprises a fluorinated copolymer having repeating units derived from ethylene and repeating units derived from TFE (hereinafter referred to as "fluorinated copolymer (A)") and a solvent capable of dissolving the fluorinated copolymer (A) at a temperature of not higher than the melting point of the fluorinated copolymer (A) (hereinafter referred to as "solvent (B)").

[Fluorinated copolymer (A)]

The fluorinated copolymer (A) is not particularly limited so long as it is a fluorinated copolymer having repeating units derived from ethylene and repeating units derived from TFE ($CF_2=CF_2$). The fluorinated copolymer (A) is preferably ETFE having repeating units derived from ethylene and repeating units derived from TFE as the main repeating units in the copolymer. In this specification, "ETFE" is used as a general term for a fluorinated copolymer containing repeating units derived from TFE and ethylene as the main repeating units in the copolymer, which may contain repeating units derived from comonomers other than ethylene and TFE as the constituting units of the copolymer.

In the fluorinated copolymer (A), the molar ratio of repeating units derived from TFE/repeating units derived from ethylene is preferably from 70/30 to 30/70, more preferably from 65/35 to 40/60, further preferably from 60/40 to 40/60, from such a viewpoint that a coating film excellent in durability, weather resistance, scratch resistance and impact resistance tends to be readily formed.

The fluorinated copolymer (A) may contain, in addition to repeating units derived from ethylene and TFE, repeating units derived from other monomers (hereinafter referred to as "other monomers") copolymerizable with ethylene and TFE.

As such other monomers, a monomer having no crosslinkable group (hereinafter referred to as a "non-crosslinkable monomer") or a monomer having a crosslinkable group (hereinafter referred to as a "crosslinkable monomer") is preferred. However, the crosslinkable group in the crosslinkable monomer includes, in addition to a crosslinkable group, a group capable of introducing a crosslinkable group and a group capable of being converted to a crosslinkable group.

The non-crosslinkable monomer may, for example, be a fluoroethylene (excluding TFE) such as $CF_2=CFCl$ or $CF_2=CH_2$; a fluoropropylene such as $CF_2=CFCF_3$, $CF_2=CHCF_3$ or $CH_2=CHCF_3$; a polyfluoroalkylethylene having a $C_{2-12}$ fluoroalkyl group, such as $CF_3CF_2CH=CH_2$, $CF_3CF_2CF_2CF_2CH=CH_2$, $CF_3CF_2CF_2CF=CH_2$, $CF_3CF_2CF_2CF_2CF=CH_2$ or $CF_2HCF_2CF_2CF=CH_2$; a perfluorovinyl ether such as $Rf(OCFXCF_2)_mOCF=CF_2$ (wherein $R^f$ is a $C_{1-6}$ perfluoroalkyl group, X is a fluorine atom or a trifluoromethyl group, and m is an integer of from 0 to 5), $CF_2=CFCF_2OCF=CF_2$, or $CF_2=CF(CF_2)_2OCF=CF_2$; a perfluorovinyl ether having a group easily convertible to a carboxylic acid group or a sulfonic acid group, such as $CH_3OC(=O)CF_2CF_2CF_2OCF=CF_2$ or $FSO_2CF_2CF_2OCF(CF_3)CF_2OCF=CF_2$; or an olefin (excluding ethylene) such as a C3 olefin having three carbon atoms such as propylene, or a C4 olefin having four carbon atoms such as butylene or isobutylene.

Among the above monomers, a fluoroolefin, particularly $CF_2=CH_2$, is preferred with a view to improving the solubility of the fluorinated copolymer (A). Further, with a view to improving the toughness or stress cracking resistance of the fluorinated copolymer (A), a polyfluoroalkylethylene, particularly $CF_3CF_2CF_2CF_2CH=CH_2$, is preferred.

As the non-crosslinkable monomer, one type may be used alone, or two or more types may be used in combination. That is, the fluorinated copolymer (A) may contain one type of repeating units derived from a non-crosslinkable monomer or may contain two or more types of repeating units derived from non-crosslinkable monomers.

In a case where the fluorinated copolymer (A) contains repeating units derived from a non-crosslinkable monomer, the content is preferably from 0.1 to 30 mol%, more preferably from 0.1 to 25 mol%, further preferably from 0.1 to 20 mol%, particularly preferably from 0.1 to 15 mol%, in all repeating units in the fluorinated copolymer (A). When the content of the non-crosslinkable monomer is within such a range, the properties of the fluorinated copolymer (A) may not be impaired, and it becomes easy to impart various functions such as solubility, toughness, stretch cracking resistance, adhesion to the reflective substrate, etc.

When the fluorinated copolymer (A) has units derived from a crosslinkable monomer, it is possible to form a coating film superior in the scratch resistance and impact resistance. Further, crosslinkable groups contribute to improvement of the adhesion to the reflective plate. Therefore, the fluorinated copolymer (A) is preferably a fluorinated copolymer (A1) having crosslinkable groups.

The crosslinkable group in a crosslinkable monomer may, for example, be a carboxylic acid group, a residue obtained by dehydration condensation of two carboxy groups in one molecule (hereinafter referred to as an "acid anhydride group"), a hydroxy group, a sulfonic acid group, an epoxy group, a cyano group, a carbonate group, an isocyanate group, an ester group, an amide group, an aldehyde group, an amino group, a hydrolyzable silyl group, a carbon-carbon double bond or a carboxylic halide group. The carboxylic acid group means a carboxy group or its salt ($-SOOM^1$, where $M^1$ is a metal atom or an atomic group capable of forming a salt with a carboxylic acid), and the sulfonic acid group means a sulfo group and its salt ($-SO_3M^2$, where $M^2$ is a metal atom or an atomic group capable of forming a salt with sulfonic acid). Among them, a hydroxy group, a carboxy group or an acid anhydride group is preferred.

The crosslinkable monomer may, for example, be a monomer having a hydroxy group, an acid anhydride, a monomer having a carboxy group, or a monomer having an epoxy group.

The monomer having a hydroxy group may, for example, be a hydroxy group-containing vinyl ether such as 2-hydroxyethyl vinyl ether, 3-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether or 6-hydroxyhexyl vinyl ether; or a hydroxy group-containing allyl ether such as 2-hydroxyethyl allyl ether, 4-hydroxybutyl allyl ether or glycerol monoallyl ether. Among them, a hydroxy group-containing vinyl ether, particularly 4-hydroxybutyl vinyl ether or 2-hydroxyethyl vinyl ether is more preferred from the viewpoint of availability, polymerization reactivity and excellent crosslinkability of the crosslinkable group.

The acid anhydride may, for example, be itaconic anhydride, maleic anhydride, citraconic anhydride or 5-norbornene-2,3-dicarboxylic anhydride. Among them, itaconic anhydride is preferred.

The monomer having a carboxy group may, for example, be an unsaturated monocarboxylic acid such as acrylic acid, methacrylic acid, vinyl acetic acid, crotonic acid, cinnamic acid, undecylenic acid, 3-allyloxypropionic acid, 3-(2-acryloxyethoxycarbonyl)propionic acid, vinylphthalic acid; an unsaturated dicarboxylic acid such as maleic acid, fumaric acid or itaconic acid; an unsaturated dicarboxylic acid ester such as an itaconic acid monoester, a maleic acid monoester or a fumaric acid monoester. The monomer having an epoxy group may, for example, be glycidylvinyl ether or glycidylallyl ether.

Among them, a monomer having a hydroxy group or an acid anhydride is preferred with a view to obtaining a coating film having a high hardness or with a view to increasing the adhesion to the substrate.

In a case where a crosslinkable group in a crosslinkable monomer is not a crosslinkable group itself but a group capable of introducing a crosslinkable group or a group convertible to a crosslinkable group, the repeating units obtained by the copolymerization are further subjected to a reaction to introduce crosslinkable groups. For example, a perfluorovinyl ether having a group easily convertible to a carboxylic acid group or a sulfonic acid group may be copolymerized and then such convertible groups in repeating units in the obtained copolymer may be converted to carboxylic acid groups or sulfonic acid groups. Such a crosslinkable monomer may, for example, be $CH_3OC(=O)CF_2CF_2CF_2OCF=CF_2$ or $FSO_2CF_2CF_2OCF(CF_3)CF_2OCF=CF_2$.

Such crosslinkable monomers may be used alone or in combination as a mixture of two or more of them. That is, two or more different types of crosslinkable groups may be present in one molecule of the fluorinated copolymer (A).

In a case where the fluorinated copolymer (A) has repeating units derived from a crosslinkable monomer, their content is preferably from 0.1 to 10 mol%, more preferably from 0.3 to 5 mol%, in all repeating units in the fluorinated copolymer (A). Within such a range, it becomes easy to impart various functions to the coating film, such as scratch resistance, impact resistance, adhesion to the reflective substrate, etc. without impairing the properties of the fluorinated copolymer (A). Hereinafter, the fluorinated copolymer (A) in a case where the fluorinated copolymer has units derived from a crosslinkable monomer, will be referred to specifically as a fluorinated copolymer (A1).

In a case where the fluorinated copolymer (A) contains repeating units derived from other monomers, their content is preferably from 0.1 to 30 mol%, more preferably from 0.1 to 25 mol%, further preferably from 0.1 to 20 mol%, particularly preferably from 0.1 to 15 mol%, based on all monomer repeating units in the fluorinated copolymer (A). When the content of repeating units derived from other monomers is within this range in the fluorinated copolymer (A) to be used for the coating composition of the present invention, it becomes possible to impart functions such as high solubility, water repellency, oil repellency, curability, adhesion to the substrate, etc. without impairing the properties of ETFE constituted substantially solely of TFE and ethylene.

The method for introducing crosslinkable groups to the fluorinated copolymer (A) may, for example, be (i) a method of copolymerizing a crosslinkable monomer together with other raw material monomers at the time of polymerization, (ii) a method of introducing a crosslinkable group to a molecular terminal of the polymer during the polymerization, by e.g. a polymerization initiator or a chain transfer agent, or (iii) a method of grafting a compound having a crosslinkable group and a functional group capable of grafting, to the polymer. These introducing methods may be used alone or in combination as the case requires. In a case where the durability of the coating film of the fluorinated copolymer (A1) is taken into consideration in the present invention, it is preferred to introduce crosslinkable groups by the above method (i).

The process for producing the fluorinated copolymer (A) may, for example, be a process of copolymerizing ethylene, TFE and an optional monomer to be used as the case requires, by a usual polymerization method. The polymerization method may, for example, be solution polymerization, suspension polymerization, emulsion polymerization, bulk polymerization, etc.

As the fluorinated copolymer (A) in the present invention, one obtained by copolymerizing ethylene and TFE, and further an optional monomer, as mentioned above, may be used, but one available as a commercial product may also be used.

Commercial products of the fluorinated copolymer (A) include, for example, Fluon (registered trademark) ETFE Series, Fluon (registered trademark) LM-ETFE Series and Fluon (registered trademark) LM-ETFE AH Series, manufactured by Asahi Glass Company, Limited, Neoflon (registered trademark) manufactured by Daikin Industries, Ltd., Dyneon (registered trademark) ETFE manufactured by Dyneon, and Tefzel (registered trademark) manufactured by DuPont.

The melting point of the fluorinated copolymer (A) is not particularly limited and is preferably from 130 to 275°C, more preferably from 140 to 265°C, particularly preferably from 150 to 260°C, from the viewpoint of the solubility, strength, etc.

The shape of the fluorinated copolymer (A) before being dissolved in the solvent (B) is preferably powdery from the viewpoint of the operation efficiency to shorten the dissolving time. However, the fluorinated copolymer (A) may be used in the form of pellets or other shapes, from the viewpoint of availability, etc.

The fluorinated copolymer (A) to be contained in the coating composition of the present invention may be of one type or of two or more types.

The content of the fluorinated copolymer (A) in the coating composition of the present invention may suitably be selected depending upon the desired film thickness of the coating film, and is preferably from 0.1 to 80 mass%, more preferably from 0.5 to 50 mass%, further preferably from 1 to 40 mass%, based on the total amount of the composition. When the content is at least the lower limit value, it is easy to form a coating film excellent in durability and also excellent in weather resistance, scratch resistance and impact resistance. When the content is at most the upper limit value, it is easy to form a uniform coating film excellent in handling efficiency, since the viscosity of the coating composition will not increase so much.

The fluorinated copolymer (A) in the coating composition of the present invention may be in a state completely dissolved in the solvent (B), but is preferably precipitated from the solution having the fluorinated copolymer (A) dissolved in the solvent (B) and dispersed. The fluorinated copolymer (A) thus precipitated is finely dispersed in the composition, whereby it becomes easy to form a uniform coating film when the composition is used as a coating material.

In a case where the fluorinated copolymer (A) is finely dispersed in the composition, the average particle size of microparticles of the fluorinated copolymer (A) is preferably from 0.005 to 2 $\mu$m, more preferably from 0.005 to 1 $\mu$m. The average particle size of microparticles of the fluorinated copolymer (A) is an average particle size measured by a small-angle X-ray scattering method or a dynamic light scattering method at 20°C.

[Solvent]

The solvent to be used for the coating composition of the present invention is a solvent which essentially comprises the solvent (B). The solvent (B) is a solvent capable of dissolving the fluorinated copolymer (A) at a temperature of not higher than the melting point of the fluorinated copolymer (A). In the present invention, "capable of dissolving the fluorinated copolymer (A) at a temperature of not higher than the melting point of the fluorinated copolymer (A)" does not mean that the fluorinated copolymer (A) can be solved at all temperatures of not higher than the melting point of the fluorinated copolymer (A), but means that the fluorinated copolymer (A) may be dissolved at least in a part of the temperature range of not higher than the melting point of the fluorinated copolymer (A).

In other words, the coating composition of the present invention is preferably capable of maintaining a solution state such that, when made into a solution, the fluorinated copolymer (A) is dissolved in an amount of at least 0.05 mass% in a certain temperature region of not higher than the melting point of the fluorinated copolymer (A), and is not necessarily in a solution state at ordinary temperature.

Further, the solvent (B) is preferably such a solvent that when a solution is made at a temperature of not higher than the melting point of the fluorinated copolymer (A), it is possible to obtain a solution having the fluorinated copolymer (A) dissolved in an amount of at least 0.05 mass%. Further, the amount of the fluorinated copolymer (A) which can be dissolved by the solvent (B) is preferably at least 5 mass%, more preferably at least 10 mass%.

The melting point of the fluorinated copolymer (A) is preferably at most 230°C, more preferably at most 200°C, further preferably at most 180°C, from the viewpoint of handling efficiency at the time of dissolving the fluorinated copolymer (A).

The boiling point of the solvent (B) is preferably at most 210°C, more preferably at most 180°C from the viewpoint of the handling efficiency and the efficiency for removal of the solvent after coating. Further, if the boiling point of the solvent (B) is too low, a problem may arise such that bubbles are likely to form at the time of removal by evaporation (drying) of the solvent after application of the coating composition, and therefore, the boiling point of the solvent (B) is preferably at least 40°C, more preferably at least 55°C, particularly preferably at least 80°C.

In a case where the solvent (B) contains a fluorinated compound, the fluorine atom content ((fluorine atomic weight $\times$ number of fluorine atoms in molecule)$\times$100/molecular weight) of at least a part of the fluorinated compound is preferably from 5 to 75 mass%, more preferably from 9 to 75 mass%, further preferably from 12 to 75 mass%, since the solubility of the fluorinated copolymer (A) is thereby increased. Further, in a case where the solvent (B) contains fluorinated compounds, it is particularly preferred that the fluorine atom contents of all such fluorinated compounds are within the above preferred range.

As the solvent (B), the following compounds (B1) to (B4) are preferred.

Compound (B1): A fluorinated aromatic compound
Compound (B2): A hydrofluoroether
Compound (B3): A hydrofluorocarbon
Compound (B4): An aliphatic compound having at least one of a carbonyl group and a nitrile group

As the fluorinated aromatic compound, the following compounds (B1-1) to (B1-16) are preferred.

Compound (B1-1): A fluorinated benzonitrile

Compound (B1-2): A fluorinated benzoic acid and its ester

Compound (B1-3): A fluorinated polycyclic aromatic compound

Compound (B1-4): A fluorinated nitrobenzene

Compound (B1-5): A fluorinated phenyl alkyl alcohol

Compound (B1-6): A fluorinated phenol and its ester

Compound (B1-7): A fluorinated aromatic ketone

Compound (B1-8): A fluorinated aromatic ether

Compound (B1-9): A fluorinated aromatic sulfonyl compound

Compound (B1-10): A fluorinated pyridine compound

Compound (B1-11): A fluorinated aromatic carbonate

Compound (B1-12): A perfluoroalkyl-substituted benzene

Compound (B1-13): Perfluorobenzene

Compound (B1-14): A polyfluoroalkyl ester of benzoic acid

Compound (B1-15): A polyfluoroalkyl ester of phthalic acid

Compound (B1-16): An aryl ester of trifluoromethanesulfonic acid

Preferred compounds (B1) are the following compounds

Compound (B1-1): Pentafluorobenzonitrile, 2,3,4,5-tetrafluorobenzonitrile, 2,3,5,6-tetrafluorobenzonitrile, 2,4,5-trifluorobenzonitrile, 2,4,6-trifluorobenzonitrile, 3,4,5-trifluorobenzonitrile, 2,3-difluorobenzonitrile, 2,4-difluorobenzonitrile, 2,5-difluorobenzonitrile, 2,6-difluorobenzonitrile, 3,4-difluorobenzonitrile, 3,5-difluorobenzonitrile, 4-fluorobenzonitrile, 3,5-bis(trifluoromethyl)benzonitrile, 2-(trifluoromethyl)benzonitrile, 3-(trifluoromethyl)benzonitrile, 4-(trifluoromethyl)benzonitrile, 2-(trifluoromethoxy)benzonitrile, 3-(trifluoromethoxy)benzonitrile or 4-(trifluoromethoxy)benzonitrile

Compound (B1-2): Pentafluorobenzoic acid, ethyl pentafluorobenzoate, methyl 2,4-difluorobenzoate, methyl 3-(trifluoromethyl)benzoate, methyl 4-(trifluoromethyl)benzoate or methyl 3,5-bis(trifluoromethyl)benzoate.

Compound (B1-3): Perfluorobiphenyl, or perfluoronaphthalene

Compound (B1-4): Pentafluoronitrobenzene, or 2,4-difluoronitrobenzene

Compound (B1-5): Pentafluorobenzyl alcohol, or 1-(pentafluorophenyl)ethanol

Compound (B1-6): Pentafluorophenyl acetate, pentafluorophenyl propanoate, pentafluorophenyl butanoate, or pentafluorophenyl pentanoate

Compound (B1-7): Pentafluorobenzene, 2,3,4,5,6-pentafluorobenzophenone, 2',3',4',5',6'-pentafluoroacetophenone, 3',5'-bis(trifluoromethyl)acetophenone, 3'-(trifluoromethyl)acetophenone, and 2,2,2-trifluoroacetophenone

Compound (B1-8): Pentafluoroanisole, 3,5-bis(trifluoromethyl)anisole, decafluorodiphenyl ether, 4-bromo-2,2',3,3',4',5,5',6,6'-nonafluorodiphenyl ether

Compound (B1-9): Pentafluorophenylsulfonyl chloride

Compound (B1-10): Pentafluoropyridine, or 3-cyano-2,5,6-trifluoropyridine

Compound (B1-11): Bis(pentafluorophenyl) carbonate

Compound (B1-12): Benzotrifluoride, 4-chlorobenzotrifluoride, or 1,3-bis(trifluoromethyl)benzene

Compound (B1-13): Hexafluorobenzene

Compound (B1-14): 2,2,2-Trifluoroethyl benzoate, 2,2,3,3-tetrafluoropropyl benzoate, 2,2,3,3,3-pentafluoropropyl benzoate, or 3,3,4,4,5,5,6,6,7,7,8,8,8-tridecafluorooctyl benzoate

Compound (B1-15): Bis(2,2,2-trifluoroethyl) phthalate

Compound (B1-16): 4-Acetylphenyl trifluoromethanesulfonate

In a case where the compound (B1) is used as the compound (B), as the compound (B1), one type may be used alone or two or more types may be used in combination.

The compound (B2) may, for example, be 1-ethoxy-1,1,2,2-tetrafluoroethane, 1-ethoxy-1,1,2,3,3,3-hexafluoropropane, 1,1,2,2-tetrafluoro-3-(1,1,2,2-tetrafluoroethoxy)propane, or 1,1,1,2,3,3-hexafluoro-4-(1,1,2,3,3,3-hexafluoropropoxy)pentane. Among them, 1,1,1,2,3,3-hexafluoro-4-(1,1,2,3,3,3-hexafluoropropoxy)pentane is preferred.

In a case where the compound (B2) is used as the compound (B), as the compound (B2), one type may be used alone, or two or more types may be used in combination.

The compound (B3) may, for example, be HFC-c447ef (1,1,2,2,3,3,4-heptafluorocyclopentane), or 1H, 1H, 1H, 2H,2H-perfluorodecane. Among them, HFC-c447ef is preferred.

In a case where the compound (B3) is used as the compound (B), as the compound (B3), one type may be used alone, or two or more types may be used in combination.

As the compound (B4), the following compounds (B41) to (B43) may be mentioned.

Compound (B41): An aliphatic compound having a carbonyl group (excluding one having a nitrile group)
Compound (B42): An aliphatic compound having a nitrile group (excluding one having a carbonyl group)
Compound (B43): An aliphatic compound having a carbonyl group and a nitrile group

The molecular structure of the compound (B4) is not particularly limited. For example, the carbon skeleton may be any one of a linear structure, a branched structure and a cyclic structure, and it may have an etheric oxygen between carbon-carbon atoms constituting the main chain or a side chain, or some of hydrogen atoms bonded to carbon atoms may be substituted by halogen atoms such as fluorine atoms.

As the compound (B41), for example, the following compounds (B41-1) to (B41-4) are preferred.

Compound (B41-1): A ketone
Compound (B41-2): An ester
Compound (B41-3): A monoether monoester of a glycol
Compound (B41-4): A carbonate

As the compound (B41-1), compounds (B41-11) and (B41-12) may be mentioned.

Compound (B41-11): A $C_{3-10}$ cyclic ketone
Compound (B41-12): A $C_{3-10}$ chain ketone

As the compound (B41-11), cyclopentanone, cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cycloheptanone, isophorone or (-)-fenchone is preferred.

As the compound (B41-12), acetone, methyl ethyl ketone, 2-pentanone, methyl isopropyl ketone, 2-hexanone, methyl isobutyl ketone, 2-heptanone, pinacolin, isopentyl methyl ketone, 2-octanone, 2-nonanone, diisobutyl ketone, 2-decanone or diisopropyl ketone is preferred.

As the compound (B41-2), ethyl formate, isopentyl formate, methyl acetate, ethyl acetate, butyl acetate, isobutyl acetate, sec-butyl acetate, pentyl acetate, isopentyl acetate, hexyl acetate, cyclohexyl acetate, 2-ethylhexyl acetate, ethyl butyrate, butyl butyrate, pentyl butyrate, bis(2,2,2-trifluoroethyl) adipate, methyl cyclohexanecarboxylate, 2,2,2-trifluoroethyl cyclohexanecarboxylate, ethyl perfluoropropionate, ethyl perfluorobutanoate, ethyl perfluoropentanoate, ethyl 2,2,3,3,4,4,5,5-octafluoropentanoate, ethyl perfluoroheptanoate or ethyl 2,2,3,3,4,4,5,5,6,6,7,7-dodecafluoroheptanoate is preferred.

As the compound (B41-3), 2-methoxyethyl acetate, 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate is preferred.

As the compound (B41-4), bis(2,2,3,3-tetrafluoropropyl)carbonate, bis(2,2,2-trifluoroethyl)carbonate or diethyl carbonate is preferred.

As the compound (B42), butyronitrile, isobutyronitrile, valeronitrile, isovaleronitrile, capronitrile, isocapronitrile, heptanenitrile, octanenitrile, nonanenitrile or decanenitrile may, for example, be mentioned. Among them, butyronitrile, isobutyronitrile valeronitrile, isovaleronitrile, capronitrile, isocapronitrile, heptanenitrile or octanenitrile is preferred.

The compounds (B41) and (B43) preferably have one or two groups selected from a carbonyl group and a nitrile group.

As the compound (B4), one type may be used alone, or two or more types may be used in combination.

As the solvent (B), it is preferred to use one member selected from the compounds (B1) to (B4). However, as the compound (B), two or more members among the compounds (B1) to (B4) may be used in combination.

The solvent (B) is preferably composed of the compound (B1), the compound (B2) or (B3), or the compound (B4), more preferably composed of the compound (B4). Further, it is preferably composed of the compound (B41) among compounds (B4), more preferably contains the compound (B41-1) as the essential component, further preferably composed of the compound (B41-12).

Particularly, in a case where the compound (B41) is used as the solvent (B), the melting point of the compound (B41) is preferably at most 220°C, more preferably at most 50°C, further preferably at most 20°C.

The boiling point of the compound (B41) is preferably at least the dissolution temperature at the time of dissolving the fluorinated copolymer (A). However, in the present invention, in a case where dissolution of the fluorinated copolymer (A) is carried out under a naturally-occurring pressure, the compound (B41) having a boiling point lower than the dissolution temperature may also be used. Here, the "naturally-occurring pressure" means a pressure which a mixture of the compound (B41) and the fluorinated copolymer (A) naturally shows in a sealed container (the same applies with respect to other solvents). The lower the boiling point of the compound (B41) is, the higher the naturally-occurring pressure becomes. Therefore, from the viewpoint of the handling efficiency and convenience, the boiling point of the compound (B41) is preferably at least room temperature, more preferably at least 50°C, further preferably at least 80°C. On the other hand, the upper limit of the boiling point of the compound (B41) is not particularly limited, but is preferably at most 210°C from the viewpoint of drying efficiency.

Further, the solvent (B) to be used in the present invention is preferably a solvent which has a polarity within a certain specific range, based on Hansen solubility parameters.

Hansen solubility parameters are ones such that the solubility parameter introduced by Hildebrand is divided into three components of dispersion component $\delta d$, polar component $\delta p$ and hydrogen bonding component $\delta h$ and represented in a three dimensional space. The dispersion component $\delta d$ represents the effect by dispersion force, the polar component $\delta p$ represents the effect by dipolar intermolecular force, and the hydrogen bonding component $\delta h$ represents the effect by hydrogen bonding force.

The definition and calculation of Hansen solubility parameters are disclosed in "Hansen Solubility Parameter: A Users Handbook (CRC Press, 2007)", edited by Charles M. Hansen. Further, by using a computer software "Hansen Solubility Parameters in Practice (HSPiP)", Hansen solubility parameters can be estimated simply from their chemical structures. In the present invention, it is preferred to use values registered in the database in HSPiP version 3 or estimated values.

Usually, Hansen solubility parameters for a certain polymer can be determined by a solubility test wherein samples of such a polymer are dissolved in many different solvents, of which Hansen solubility parameters have already been known, and the solubilities are measured. Specifically, such a sphere (solubility sphere) is to be found out whereby all three dimensional points of the solvents which dissolved the polymer among the solvents used for the above solubility test are included inside of the sphere, and points of the solvents which did not dissolve the polymer are located outside the sphere, and the central coordinate of such a sphere is taken as Hansen solubility parameters for the polymer.

For example, in a case where Hansen solubility parameters of another solvent not used for the measurement of Hansen solubility parameters for the above polymer are ($\delta d$, $\delta p$, $\delta h$), if the point represented by such coordinates is included inside of the solubility sphere of the above polymer, such a solvent is considered to dissolve the above polymer. On the other hand, if such a coordinate point is located outside of the solubility sphere of the above polymer, such a solvent is considered not to be able to dissolve the above polymer.

In the present invention, as the central coordinate of the solubility sphere in Hansen solubility parameters of the solvent (B), it is possible to employ coordinates (15.7, 5.7, 4.3) being Hansen solubility parameters of diisopropyl ketone as the most suitable standard solvent to disperse the fluorinated copolymer in the form of microparticles at room temperature.

Of the solvent (B), the dissolution index (R) calculated by the following formula (1) by using the above Hansen solubility parameter coordinates ($\delta d$, $\delta p$, $\delta h$), is preferably less than 25, more preferably less than 16, since it has high affinity to the fluorinated copolymer (A) and presents high solubility and dispersibility of the fluorinated copolymer (A).

$$R = 4 \times (\delta d - 15.7)^2 + (\delta p - 5.7)^2 + (\delta h - 4.3)^2 \qquad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

For example, among compounds (B41), the following compounds may be mentioned as solvents, of which R calculated from the above formula (1) is less than 25:

Diisopropyl ketone, methyl ethyl ketone, 2-pentanone, methyl isopropyl ketone, 2-hexanone, methyl isobutyl ketone, 2-heptanone, pinacolin, isopentyl methyl ketone, isopentyl formate, ethyl formate, methyl acetate, ethyl acetate, butyl acetate, sec-butyl acetate, isobutyl acetate, hexyl acetate, cyclohexyl acetate, 2-ethylhexyl acetate, ethyl butyrate, butyl butyrate, 2-butoxyethyl acetate, 1-ethoxy-2-acetoxypropane, 3-methoxybutyl acetate, 3-methoxy-3-methylbutyl acetate, etc.

Further, for example, among compounds (B41), the following compounds may be mentioned as solvents, of which R calculated from the above formula (1) is less than 16:

Diisopropyl ketone, methyl ethyl ketone, 2-pentanone, methyl isopropyl ketone, 2-hexanone, methyl isobutyl ketone, 2-heptanone, pinacolin, isopentyl methyl ketone, isopentyl formate, ethyl acetate, butyl acetate, sec-butyl acetate, isobutyl acetate, hexyl acetate, cyclohexyl acetate, ethyl butyrate, butyl butyrate, 2-butoxyethyl acetate, 1-ethoxy-2-acetoxypropane, 3-methoxy-3-methylbutyl acetate, etc.

In a case where the solvent (B) is a solvent having two or more compounds mixed, using the respective Hansen solubility parameters of the solvents to be used, average Hansen solubility parameters are obtained from the mixing ratio (the volume ratio), and using them as the Hansen solubility parameters of the solvent mixture, the above dissolution index (R) is calculated. Even in a case where the solvent (B) is a solvent having two or more compounds mixed, the dissolution index (R) in such a solvent mixture is preferably less than 25, more preferably less than 16.

Further, the coating composition of the present invention may contain another solvent (C) other than the above-described solvent (B) within a range not to impair the effects of the present invention.

For example, such another solvent (C) may be a solvent which has not a temperature range for dissolving the fluorinated copolymer (A) at a temperature of not higher than the melting point of the fluorinated copolymer (A) or the boiling point of the solvent whichever is lower.

The content of the solvent (B) in the total amount of the solvent in the coating composition of the present invention is preferably at least 50 mass%, more preferably at least 70 mass%, particularly preferably 100 mass%, since it thereby becomes easy to dissolve the fluorinated copolymer (A).

The content of the solvent (B) in the coating composition of the present invention is preferably from 20 to 99.9 mass%, more preferably from 50 to 99.5 mass%, further preferably from 60 to 99 mass%, based on the total amount of the coating composition. When the content is at least the above lower limit, the coating composition will be excellent in handling efficiency at the time of its application, and it becomes easy to form a uniform coating film. When the content is at most the upper limit value, it becomes easy to increase the thickness of the coating film, and it becomes easy to form a coating film which is excellent in durability, and also excellent in weather resistance, scratch resistance and impact resistance.

[Other resin (D)]

The coating composition of the present invention may contain a resin (D) other than the fluorinated copolymer (A). However, in the case of the coating composition to be applied to the incoming/outgoing surface side of the reflective substrate, the type and content of such other resin (D) are selected for use so that the transmittance of sunlight will be high, and the reflectance of the reflective plate will not be decreased too much.

Other resin (D1) to be incorporated to the coating composition to be applied on the incoming/outgoing surface side of the reflective substrate may, for example, be a polysiloxane, a silicone resin, an acryl silicone resin, an acryl resin, an acryl polyol resin or a fluororesin other than the fluorinated copolymer (A). Further, other resin (D2) to be incorporated to the coating composition to be applied to the non-incoming/outgoing surface side of the reflective substrate may, for example, be, in addition to the above resin (D1), a polyester resin, a polyester polyol resin, a polycarbonate resin, a urethane resin, an alkyd resin, an epoxy resin, an oxetane resin or an amino resin.

Other resin (D) may be a resin which has crosslinkable groups and which can be crosslinked by the curing agent component.

The content of other resin (D1) in the coating composition to be applied on the incoming/outgoing surface side of the reflective substrate is preferably from 1 to 200 parts by mass, per 100 parts by mass of the fluorinated copolymer (A).

The content of other resin (D2) in the coating composition to be applied to the non-incoming/outgoing surface side of the reflective substrate is preferably from 1 to 200 parts by mass, per 100 parts by mass of the fluorinated copolymer (A).

[Other component (E)]

The coating composition of the present invention may contain a component (E) other than the fluorinated copolymer (A), the solvent (B), and other solvent (C) and other resin (D) which may be used as the case requires.

In a case where the coating composition of the present invention is a composition to be applied on the non-incoming/outgoing surface side of the reflective substrate, it is preferred that as other component (E), a pigment component is contained for the purpose of corrosion prevention, coloring, reinforcement, etc. of a coating film to be formed. As such a pigment component, at least one pigment selected from the group consisting of an anti-corrosive pigment, a coloring pigment and an extender pigment is preferred.

The anti-corrosive pigment is a pigment to prevent corrosion or alteration of the reflective substrate. A lead-free anti-corrosive pigment is preferred with a view to presenting little load to the environment. The lead-free anti-corrosive pigment may, for example, be zinc cyanamide, zinc oxide, zinc phosphate, calcium magnesium phosphate, zinc molybdate, barium borate, zinc calcium cyanamide or aluminum phosphate.

The coloring pigment is a pigment to color the coating film. The coloring pigment may, for example, be titanium oxide, carbon black or iron oxide.

The extender pigment is a pigment to improve the hardness of the coating film and to increase the thickness. The extender pigment may, for example, be talc, barium sulfate, mica or calcium carbonate.

The content of the pigment component in the coating composition to be applied to the non-incoming/outgoing surface side of the reflective substrate is preferably from 50 to 500 parts by mass, more preferably from 100 to 400 parts by mass, based on 100 parts by mass as the total amount of the solid content in the coating composition at the time of use. When the content of the pigment component is at least the lower limit value, the functions of the pigment component can easily be obtainable. When the content of the pigment component is at most the upper limit value, it tends to be less likely that the coating film is cracked or damaged by an impact of e.g. sand, and the heat resistance of the coating film will be improved.

It is preferred that the coating composition to be applied on the incoming/outgoing surface side of the reflective substrate, does not contain the above pigment component in order to prevent deterioration of the reflectance at the incoming/outgoing surface.

The content of the pigment component in the coating composition to be applied on the incoming/outgoing surface side of the reflective substrate is preferably at most 3 parts by mass, particularly preferably 0, based on 100 parts by mass as the total amount of the solid content in the coating composition at the time of its use.

Further, the component (E) other than a pigment may, for example, be a silane coupling agent to improve the adhesion of the coating film; a photostabilizer such as a hindered amine type photostabilizer; an organic ultraviolet absorber such as a benzophenone type compound, a benzotriazole type compound, a triazine type compound or a cyanoacrylate type compound; an inorganic ultraviolet absorber such as titanium oxide, zinc oxide or cerium oxide; a delustering agent such as ultrafine synthetic silica; a nonionic, cationic or anionic surfactant; or a leveling agent.

The content of other component (E) other than a pigment may suitably be selected within a range not to impair the effects of the present invention.

The coating composition of the present invention may be in a solution state having the fluorinated copolymer (A) dissolved in a solvent or in a state having the fluorinated copolymer (A) dispersed in a solvent. Even in the case of dispersing the fluorinated copolymer (A), the composition is preferably one having microparticles of the fluorinated copolymer (A) precipitated and dispersed via a solution state having the fluorinated copolymer (A) dissolved in a solvent.

Further, it is preferred that the coating composition of the present invention shows fluidity in the vicinity of room temperature. Here, "in the vicinity of room temperature" is at a level of from 10 to 40°C, preferably from 15 to 30°C.

The vapor pressure at the time of applying the coating composition of the present invention i.e. the vapor pressure in a temperature range showing a solution state or a dispersion state, is preferably at least not higher than naturally occurring pressure, more preferably not higher than 3 MPa, further preferably not higher than 2 MPa, particularly preferably not higher than 1 MPa, most preferably not higher than ordinary pressure.

The coating composition of the present invention is preferably a composition having the following components combined.

(α) As the fluorinated copolymer (A), a fluorinated copolymer (A1) is used.

(β) The solvent is a solvent made of the compound (B1), the compound (B2) or (B3), or the compound (B4).

The component (α) in the above combination is more preferably microparticles of the fluorinated copolymer (A1). Further, the component (β) in the above combination is more preferably made of the compound (B4), further preferably made of the compound (B41).

Further, in the case of a coating composition to be applied on the non-incoming/outgoing side of a reflective substrate of a solar heat-collecting reflective plate, it is preferred to further add a pigment to the above combination of components (α) and (β).

[Production process]

As the process for producing the coating composition of the present invention, a process having a dissolving step of dissolving the fluorinated copolymer (A) in the solvent (B), is preferred.

The dissolution temperature for dissolving the fluorinated copolymer (A) in the solvent (B) is preferably a temperature lower by at least 30°C than the melting point of the fluorinated copolymer (A). The melting point of the fluorinated copolymer (A) is about 275°C at the highest. Therefore, the dissolution temperature is preferably at most 245°C, more preferably at most 230°C, particularly preferably at most 200°C, from the viewpoint of excellent operation efficiency.

Further, the lower limit for the dissolution temperature is preferably 0°C, more preferably 20°C, from such a viewpoint that the fluorinated copolymer (A) can thereby be sufficiently dissolved.

In a case where as the solvent, another solvent (C) is to be used in addition to the solvent (B), the fluorinated copolymer (A) may be dissolved in a solvent mixture having the solvent (B) and another solvent (C) mixed, or after dissolving the fluorinated copolymer (A) in the solvent (B), another solvent (C) may be added.

In the above dissolving step in the process for producing the composition of the present invention, conditions other than the temperature are not particularly limited. The pressure in the dissolving step is not particularly limited, and ordinary pressure is preferred.

However, for example, in a case where the boiling point of the solvent is lower than the dissolution temperature in the dissolving step depending upon the type of the fluorinated copolymer (A) or the solvent, the pressure is adjusted to be at least not higher than the naturally occurring pressure by means of a pressure resistant container. The pressure at that time is preferably not higher than 3 MPa, more preferably not higher than 2 MPa, further preferably not higher than 1 MPa, particularly preferably from 0.01 to 1 MPa.

The dissolution time depends on e.g. the content of the fluorinated copolymer (A) and the shape, etc. of the fluorinated copolymer (A) before dissolution, and it may suitably be determined depending upon such a content and shape, etc.

The dissolution method in the dissolving step is not a special one and may be a common dissolution method. For example, a method may be mentioned wherein the necessary amounts of the respective components to be blended into the coating composition, are weighed, and such components are uniformly mixed and dissolved in the solvent (B) at a temperature of not higher than the melting of the fluorinated copolymer (A).

In the dissolving step, it is preferred to use a common stirring/mixing machine such as a homomixer, a Henschel mixer, a Banbury mixer, a pressure kneader, or a single screw or twin screw extruder. Further, in a case where heating is required in the dissolving step, the mixing and heating of various raw material components may be carried out at the same time, or after mixing various raw material components, heating may be carried out with stirring as the case requires.

In the case of carrying out the dissolution under pressure, an apparatus such as an autoclave equipped with a stirrer may be used. The shape of stirring vanes may, for example, be a marine propeller vane, a paddle vane, an anchor vane, a turbine vane or the like. In a small scale operation, a magnetic stirrer or the like may be employed.

In a case where the coating composition of the present invention is used in such a state that the fluorinated copolymer (A) is dissolved in the solvent (B), the composition after the dissolving step may be used, if necessary, by adding the above-mentioned other component (E).

Further, in order to obtain the coating composition having microparticles of the fluorinated copolymer (A) dispersed in a solvent, after the dissolving step, a precipitation step is carried out to precipitate the fluorinated copolymer (A) in the form of microparticles from the solution having the fluorinated copolymer (A) dissolved in the solvent (B). For example, in the dissolving step, the fluorinated copolymer (A) is dissolved in an amount exceeding the saturation dissolution amount of the fluorinated copolymer (A) under the temperature and pressure conditions for the precipitation step, and by cooling, the fluorinated copolymer (A) is permitted to precipitate, whereby microparticles can be dispersed. The cooling method is not particularly limited, and it may be annealing or quenching.

The pressure in the precipitation step is preferably ordinary pressure from the viewpoint of the handling efficiency. In a case where in the dissolving step, the fluorinated copolymer (A) is dissolved under pressure, it is preferred to reduce the pressure to ordinary pressure at the same time as cooling.

Further, in a case where as the solvent, the solvent (B) and another solvent (C) are employed, such another solvent (C) may be added after the precipitation step.

In a case where the coating composition of the present invention is used in such a state that the fluorinated copolymer (A) is dispersed in the solvent (B), the composition after the precipitation step may be used, if necessary, by adding the above-mentioned other component (E).

By using the coating composition of the present invention as described above, it is possible to form a hard coating film containing fluorine atoms, as a coating film to protect a reflective substrate in a solar heat-collecting reflective plate (1) wherein the reflective substrate is made of metal, or in a solar heat-collecting reflective plate (2) wherein the reflective substrate comprises a glass substrate and a reflective metal layer provided on the incoming/outgoing surface side of the glass substrate. Such a coating film is a hard coating film having repeating units derived from ethylene and ETFE and thus, has excellent scratch resistance and impact resistance, whereby it is less susceptible to deterioration even by impingement of sand, etc. Further, such a coating film not only has an improved weather resistance as it contains fluorine atoms, but also has a less degree of expansion or shrinkage by heat as it is a hard coating film, and further moisture absorption or water absorption is suppressed, and the heat resistance, water resistance and moisture proofing property are further increased. Particularly, such a coating film is formed on the incoming/outgoing surface side of a reflective substrate of a solar heat-collecting reflective plate, and even if it is exposed to a high temperature, it is possible to prevent deterioration or peeling by heat constantly for a long period of time by its excellent heat resistance.

<Solar heat-collecting reflective plate>

The solar heat-collecting reflective plate of the present invention is a reflective plate to reflect sunlight in a solar heat-collecting system which collects solar heat and utilize it as thermal energy.

As the solar heat-collecting reflective plate of the present invention, a solar heat-collecting reflective plate (1) wherein the reflective substrate is made of metal, and a solar heat-collecting reflective plate (2) wherein the reflective substrate comprises a glass substrate and a reflective metal layer provided on the incoming/outgoing surface side of the glass substrate, may be mentioned.

[Solar heat-collecting reflective plate (1)]

The solar heat-collecting reflective plate (1) has a reflective substrate made of metal and has a coating film formed from the coating composition of the present invention on at least one surface side of the reflective substrate. The coating film in the solar heat-collecting reflective plate (1) is preferably provided on the incoming/outgoing surface side of the reflective substrate with a view to protecting the reflective substrate. However, the coating film in the solar heat-collecting reflective plate (1) may be provided on the non-incoming/outgoing surface side of the reflective substrate. In the coating film to be provided on the non-incoming/outgoing surface side of the reflective substrate, a pigment component such as a corrosion-preventing pigment, a coloring pigment or an extender pigment may be contained.

(Reflective substrate)

The reflective substrate of a solar heat-collecting reflective plate (1) is a portion to reflect light in the reflective plate and made of metal. The reflective substrate made of metal is preferably a reflective substrate in which the surface on the incoming/outgoing surface side of a metal substrate formed of metal, is mirror-finished, or a reflective substrate wherein a reflective metal layer is provided on the incoming/outgoing surface side of the metal substrate, with a view to reflecting sunlight with high efficiency. However, the reflective substrate of a solar heat-collecting reflective plate (1) may be a reflective substrate wherein the surface on the incoming/outgoing side of the metal substrate is mirror-finished and further, a reflective metal layer is provided on the mirror-finished surface side.

The metal to form the metal substrate may, for example, be aluminum, an aluminum alloy or stainless steel. Among them, aluminum or an aluminum alloy is preferred, since the reflectance of sunlight is high.

The thickness of the metal substrate is preferably from 0.1 to 10 mm, more preferably from 0.5 to 5 mm.

Such mirror finish is usually carried out by e.g. physical polishing, but may be carried out also by a chemical or electrical polishing method. In the mirror finish in a metal substrate, it is preferred to carry out the polishing so that the surface roughness Ra of the metal substrate will be at most 0.3 $\mu$m, more preferably at most 0.1 $\mu$m.

The reflective metal layer to be provided on the incoming/outgoing surface side of the metal substrate may be a reflective metal layer containing at least one element selected from the group consisting of titanium, molybdenum, manganese, aluminum, silver, copper, gold and nickel. Such a reflective metal layer may be formed by e.g. phosphate treatment, anodizing treatment or vacuum vapor deposition treatment.

The thickness of such a reflective metal layer may, for example, be from 5 to 1,500 nm.

Such a reflective metal layer may be a single layer, or two or more layers.

The reflective substrate in a solar heat-collecting reflective plate (1) is preferably a reflective substrate (1-1) wherein the incoming/outgoing surface side of a metal substrate made of aluminum or an aluminum alloy, is mirror-finished, a reflective substrate (1-2) wherein a reflective metal layer is formed on the incoming/outgoing surface side of a metal substrate made of aluminum or an aluminum alloy, or a reflective substrate (1-3) which has a mirror-finished surface as the surface on the incoming/outgoing surface side of a metal substrate made of aluminum or an aluminum alloy and which further has a reflective metal layer on the mirror-finished surface side, more preferably the reflective substrate (1-1) or the reflective substrate (1-2).

Now, the solar heat-collecting reflective plate (1) will be describe in detail with reference an embodiment.

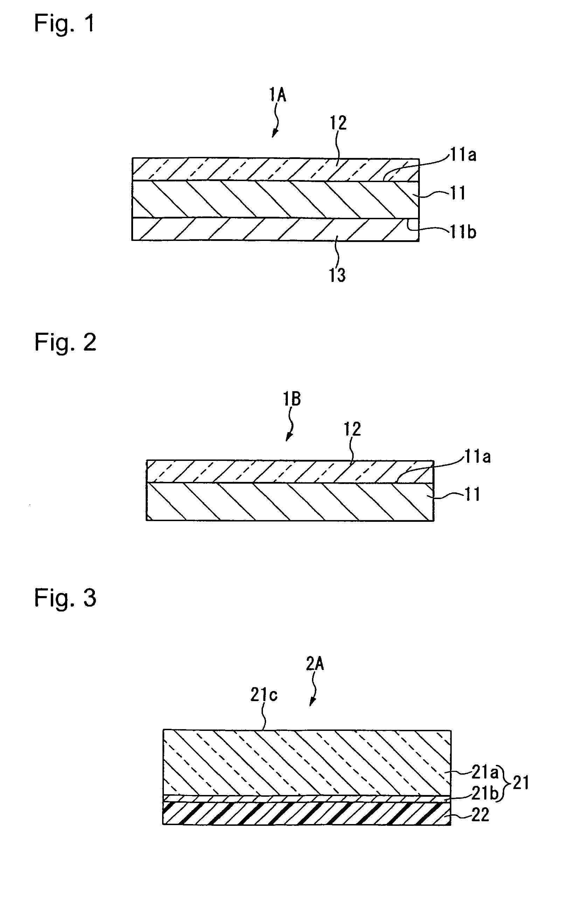

Fig. 1 is a cross-sectional view illustrating a solar heat-collecting reflective plate 1A (hereinafter referred to as the "reflective plate 1A" as an embodiment of the solar heat-collecting reflective plate (1). Fig. 2 is a cross-sectional view illustrating a solar heat-collecting reflective plate 1 B (hereinafter referred to as the "reflective plate 1 B") as another embodiment of the solar heat-collecting reflective plate (1).

(First embodiment)

As shown in Fig. 1, the reflective plate 1A comprises a reflective substrate 11 having an incoming/outgoing surface 11a, a coating film 12 to protect the incoming/outgoing surface 11a side of the reflective substrate 11, and a coating film 13 to protect the opposite surface (hereinafter referred to as the "non-incoming/outgoing surface 11b") side to the incoming/outgoing surface 11a of the reflective substrate 11.

The reflective substrate 11 is any one of the above-mentioned reflective substrates.

The coating film 12 is a coating film to protect the incoming/outgoing surface 11 a side of the reflective substrate 11 and is formed by the above-described coating composition of the present invention. The coating film 12 is preferably formed by the coating composition not containing a pigment component.

The thickness of the coating film 12 is preferably from 0.5 to 10 $\mu$m.

Another layer may be provided between the reflective substrate 11 and the coating film 12. Such another layer may, for example, be a resin layer made of e.g. an alkyd resin, an epoxy resin or an acryl resin, or a layer made of a silane coupling agent in order to improve the adhesion between the coating film 12 and the reflective substrate 11.

The coating film 13 is a coating film to protect the non-incoming/outgoing surface 11 b side of the reflective substrate 11 and is formed by the above-described coating composition of the present invention. The coating film 13 is preferably formed by the coating composition containing a pigment component.

The thickness of the coating film 13 is preferably from 3 to 150 μm.

Another layer may be provided between the reflective substrate 11 and the coating film 13. Such another layer may, for example, be a resin layer made of e.g. a alkyd resin, an epoxy resin or an acryl resin, or a layer made of a silane coupling agent in order to improve the adhesion between the coating film and the reflective substrate 11.

The reflective plate 1A may be produced by a known production process except that the coating composition of the present invention is employed.

The process for producing the reflective plate 1A may be a process which comprises applying the coating composition of the present invention to the incoming/outgoing surface 11 a and the non-incoming/outgoing surface 11 b of the reflective substrate 11 to form coating layers, followed by drying to form coating films 12 and 13. It is preferred that a pigment component is contained in the coating composition to form the coating film 13.

The application of the coating composition can be carried out by means of a brush, a roller, a spray, a flow coater, an applicator or the like. The amount of the coating composition to be applied may suitably be selected so that the dried film thickness will be within the above-mentioned range.

In a case where the coating composition of the present invention is used in the form of a solution having the fluorinated copolymer (A) dissolved, the temperature of the coating composition at the time of applying it, is preferably at least the lower limit temperature within the temperature range where the solution state can be maintained, and in a case where it is used in the form of a dispersion having the fluorinated copolymer (A) dispersed, the temperature of the coating composition is preferably at least the lower limit temperature within the temperature range where the dispersion state can be maintained.

In a case where a coating composition in a solution state is used as the coating composition, the temperature at the time of its application is preferably at most 230°C, more preferably at most 200°C, particularly preferably from 5 to 150°C, since the application to the reflective substrate of the solar heat-collecting reflective plate thereby becomes easy.

The temperature at the time of drying the coating layer is preferably from ordinary temperature to 350°C, more preferably from 50 to 300°C, further preferably from 100 to 250°C. The drying may be carried out under reduced pressure, as the case requires.

Further, in a case where the fluorinated copolymer (A1) is used as the fluorinated copolymer (A), a curing agent corresponding to crosslinkable groups of the fluorinated copolymer (A1), may be used as the case requires, to carry out the curing reaction to form a cured coating film Such a curing reaction may be carried out at the same time as the drying of the coating layer, or after drying the coating layer, such a curing reaction may be carried out again.

The coating films 12 and 13 may be formed at the same time or sequentially.

Further, in a case where the coating composition of the present invention is used in the form of a dispersion having the fluorinated copolymer (A) dispersed, annealing is preferably carried out by heating, as the case requires, since a coating film formed merely by the application followed by drying, may sometimes be poor in water resistance, etc. The temperature for such annealing is preferably from 80 to 200°C, more preferably from 80 to 160°C. Further, the annealing time is preferably from 0.1 to 2 hours, more preferably from 0.1 to 1 hour, although it depends also on the annealing temperature.

The reflective plate 1A as described above, has coating films 12 and 13 formed by the coating composition of the present invention, whereby it has excellent durability, weather resistance, scratch resistance and impact resistance. Especially, the coating film 12 is formed on the incoming/outgoing surface 11a side in the reflective plate 1A, whereby it is exposed to a high temperature, and further the frequency of impingement of sand, etc. is also high, however, since the coating film is hard and excellent in heat resistance, scratch resistance and impact resistance, deterioration or peeling of the coating film is prevented. Therefore, the reflective substrate 11 can be protected stably for a long period of time.

(Second embodiment)

The reflective plate 1 B in this embodiment is the same as the reflective plate 1A except that no coating film 13 is provided on the non-incoming/outgoing surface 11 b side of the reflective substrate 11. In the reflective plate 1B, the same portions as in the reflective plate 1A are identified with the same symbols as in the reflective plate 1A, and their description will be omitted. In the reflective plate 1B, the non-incoming/outgoing surface side of the reflective plate 1 B is covered by e.g. a fixing member to fix the reflective plate 1B, and such a construction is useful particularly in a case where no protection is required.

Further, in the same manner as in the reflective plate 1A, the reflective plate 1 B may also be have another layer between the reflective substrate 11 and the coating film 12.

The reflective plate 1 B can be produced by the same production process for the reflective plate 1A except that no coating film 13 is formed. That is, a method may be mentioned wherein the coating composition of the present invention is applied to the incoming/outgoing surface 11 a of the reflective substrate 11 to form a coating layer, followed by drying to form a coating film 12. Also in the production of the reflective plate 1B, in a case where the coating composition of the present invention is used in the form of a dispersion having the fluorinated copolymer (A) dispersed, it is preferred to carry out annealing, as the case requires. Preferred conditions for the annealing are the same as the preferred conditions described for the process for producing the reflective plate 1A.

Also in the reflective plate 1B, the coating film is hard, and by the coating film 12 excellent in durability such as heat resistance, weather resistance, scratch resistance and impact resistance, the incoming/outgoing surface 11 a of the reflective substrate 11 is protected stably for a long period of time.

The solar heat-collecting reflective plate (1) in the present invention is not limited to the above-described reflective plates 1A and 1 B. For example, another layer may be provided between the reflective substrate 11 and the coating film 12. As such another layer, for example, a layer intended to further increase the effect for protecting the reflective substrate may be mentioned. Such another layer to increase the protective effect may, for example, be a coating film disclosed in Patent Document 2. Such another layer may be a single layer, or two or more layers.

Further, in a case where a coating film 13 is provided on the incoming/outgoing surface 11 b side of the reflective substrate 11, another layer to increase the protective effect may be provided between them.

Further, the solar heat-collecting reflective plate (1) may be a reflective plate wherein a coating film is provided only on the non-incoming/outgoing surface side of the reflective substrate. In such a case, it is preferred that a known coating film is formed on the incoming/outgoing surface side of the reflective substrate.

[Solar heat-collecting reflective plate (2)]

The solar heat-collecting reflective plate (2) has a reflective substrate comprising a glass substrate and a reflective metal layer provided on the non-incoming/outgoing surface side of the glass substrate, and has a coating film formed by the coating composition of the present invention on at least one surface side of the reflective substrate. The coating film in the solar heat-collecting reflective plate (2) is protected by the glass substrate on the incoming/outgoing surface side of the reflective substrate. The coating composition for coating the surface of the present invention. may be applied to the surface of the glass substrate for the purpose of protecting the surface of glass, or may be provided on the reflective metal layer side of the reflective substrate, i.e. on the non-incoming/outgoing surface side, for the purpose of protecting the reflective metal layer. It is preferred that pigment components such as a corrosion-preventive pigment, a coloring pigment and an extender pigment, etc. are contained in the coating film to be provided on the reflective metal layer side of the reflective substrate.

Now, the solar heat-collecting reflective plate (2) will be described in detail with reference to an embodiment.

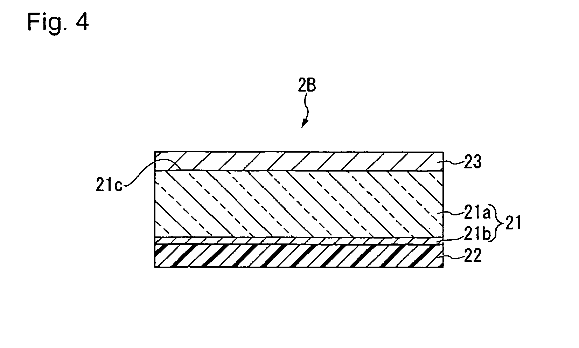

Fig. 3 is a cross-sectional view illustrating a solar heat-collecting reflective plate 2A (hereinafter referred to as the "reflective plate 2A") as an embodiment of the solar heat-collecting reflective plate (2). Fig. 4 is a cross-sectional view illustrating a solar heat-collecting reflective plate 2B (hereinafter referred to as the "reflective plate 2B") as another embodiment of the solar heat-collecting reflective plate (2).

(Third embodiment)

As shown in Fig. 3, the reflective plate 2A comprises a reflective substrate 21 comprising a glass substrate 21 a and a reflective metal layer 21 b formed on the opposite side of the incoming/outgoing surface 21 c of the glass substrate 21 a, and a coating film 22 formed on the reflective metal layer 21 b side of the reflective substrate 21.

As the glass substrate 21 a, a known glass for a mirror may be used, and for example, soda lime glass or the like may be mentioned.

The thickness of the glass substrate 21 a is preferably from 0.5 to 10 mm.

The reflective metal layer 21 b is a layer to reflect sunlight. Silver is preferred as the metal to form the reflective metal layer 21 b.

The content of silver in the reflective metal layer 21 b is preferably at least 60 mass%, particularly preferably 100 mass%.

The thickness of the reflective metal layer 21 b is preferably from 300 to 1,500 g/m$^2$.

The coating film 22 is a coating film to protect the non-incoming/outgoing surface side (rear side) of the reflective substrate 21 a and is formed by the coating composition of the present invention as described above. The coating film 22 is preferably formed by the coating composition containing a pigment component.

The thickness of the coating film 22 is preferably from 0.5 to 10 μm.

The reflective plate 2A may be produced by a known production process except that the coating composition of the present invention is used.

The process for producing the reflective plate 2A may, for example, be a process which comprises applying the coating composition of the present invention to the reflective metal layer 21 b side of the reflective substrate 21 to form a coating layer, followed by drying to form a coating film 22.

With respect to the application, the amount to be applied and the temperature for drying the coating composition, the same method as the above-described method for the reflective plate 1A may be employed. Also in the case of making the coating film 22 to be a cured coating film, the same method as the above-described method for the reflective plate 1A may be employed. Further, also in the production of the reflective plate 2A, in a case where the coating composition of the present invention is used in the form of a dispersion having the fluorinated copolymer (A) dispersed, it is preferred to carry out annealing as the case requires. Preferred conditions for the annealing are the same as the preferred conditions described for the process for producing the reflective plate 1A.

The reflective plate 2A as described above has a coating film 22 which is formed by the coating composition of the present invention and which has excellent durability, weather resistance, scratch resistance and impact resistance, and thus is useful stably for a long period of time.

(Fourth embodiment)

The reflective plate 2B is the same as the reflective plate 2A except that a coating film 23 is formed on the incoming/outgoing surface 21 c side of the reflective substrate 21a. In the reflective plate 2B, the same portions as in the reflective plate 2A are identified with the same symbols, and their description will be omitted.

The coating film 23 is a coating film to protect the incoming/outgoing surface 21c side of the reflective substrate 21 and is formed by the coating composition of the present invention as described above. The coating film 23 is preferably formed by the coating composition not containing a pigment component.

The thickness of the coating film 23 is preferably from 3 to 150 $\mu$m.

The reflective plate 2B may be produced by a known production process except that the coating composition of the present invention is used.

The process for producing the reflective plate 2B may, for example, be a process which comprises applying the coating composition of the present invention to the reflective metal layer 21 b side and the incoming/outgoing surface 21 c side of the reflective substrate 21 to form coating layers, followed by drying to form coating films 22 and 23.

With respect to the application, the amount to be applied and the temperature for drying the coating composition, the same method as the above-described method for the reflective plate 1A may be employed. Also in the case of making the coating films 22 and 23 to be cured coating films, the same method as the above-described method for the reflective plate 1A may be employed. Further, also in the production of the reflective plate 2B, in a case where the coating composition of the present invention is used in the form of a dispersion having the fluorinated copolymer (A) dispersed, it is preferred to carry out annealing, as the case requires. Preferred conditions for the annealing are the same as the preferred conditions described for the process for producing the reflective plate 1A.

The coating films 22 and 23 may be formed simultaneously or sequentially.

Also the reflective plate 2B has coating films 22 and 23 which have excellent durability, weather resistance, scratch resistance and impact resistance, and thus is useful stably for a long period of time.

EXAMPLES

Now, the present invention will be described in detail with reference to Examples. However, it should be understood that the present invention is by no means restricted by the following description.

[Example 1]

In a test tube with a lid made of borosilicate glass, 50 mg of ETFE (constituting monomers and molar ratio: TFE/ethylene/hexafluoropropylene/3,3,4,4,5,5,6,6,6-nonafluoro-1-hexene/itaconic anhydride=47.7/42.5/8.4/1.2/0.2, melting point: 188°C, hereinafter referred to as "ETFE1") as the fluorinated copolymer (A1) and 2.45 g of diisopropyl ketone (a dissolution index (R) calculated by the above formula (I) (hereinafter referred to simply as "R")=0) as the compound (B41-12) were put and heated at 140°C with stirring, whereby a uniform transparent solution was obtained.

The test tube was gradually cooled to room temperature to obtain a uniform dispersion of microparticles of ETFE 1 free from sedimentation (concentration of ETFE1: 2 mass%). The average particle size of microparticles of ETFE1 was 20 nm as an average particle size measured by a small-angle X-ray scattering technique at 20°C. Further, this dispersion was diluted so that the concentration of ETFE1 became 0.05 mass% and observed by a transmission electron microscope, whereby the primary particle size was confirmed to be from 20 to 30 nm.

This dispersion (coating composition (1-A)) was applied on a glass substrate at room temperature by potting, followed by air drying and then heated and dried for 3 minutes on a hot plate of 100°C to obtain a glass substrate I-1 having a coating film of ETFE1 formed on its surface. The obtained coating film was observed by an optical microscope (50 magnifications), whereby it was confirmed to be a uniform smooth film. Further, the film thickness was measured by a stylus profilometer and found to be 3 $\mu$m.

Further, on a mirror-finished incoming/outgoing surface of an aluminum plate, a coating film having a thickness of 3 $\mu$m was formed in the same manner to obtain a test plate II-1 provided with the coating film.

[Example 2]

To 830 g of the dispersion of ETFE1 (coating composition (1-A)), 200 g of titanium oxide (tradename "D-918" manufactured by Sakai Chemical Industry Co., Ltd.) as a pigment component and 930 g of glass beads having a diameter of 1 mm were added and stirred by a paint shaker for 2 hours. After the stirring, filtration was carried out to remove the glass beads and to obtain a coating composition (1-B) containing the pigment component.

On the surface of a glass substrate, the coating composition (1-B) was applied so that the film thickness would be 5 $\mu$m, aged for 20 minutes in a constant temperature chamber at 25°C and then heated at 140°C for 20 minutes to form a coating film thereby to obtain a test plate I-2 provided with the coating film.

Further, on a chromate-treated incoming/outgoing surface of an aluminum plate, the coating composition (1-B) was applied so that the film thickness would be 5 $\mu$m, aged for 20 minutes in a constant temperature chamber at 25°C and then heated at 140°C for 20 minutes to form a coating film thereby to obtain a test plate II-2 provided with the coating film.

[Comparative Example 1]

A coating composition (2-A) is obtained in the same manner as in Example 1 except that as the solvent, cyclohexanone (R=25.6) is used instead of diisopropyl ketone. Further, by using such a coating composition (2-A), in the same manner as in Example 2, a coating composition (2-B) containing titanium oxide (tradename "D-918" manufactured by Sakai Chemical Industry Co., Ltd.) is obtained.

By using the coating composition (2-B), in the same manner as in Example 2, a coating film-attached test plate I-3 having the coating film formed on the surface of a glass substrate, and a coating film-attached test plate II-3 having the coating film formed on the incoming/outgoing surface of an aluminum plate, are obtained.

With respect to the coating film-attached test plates I-1 to I-3, the hardness, water resistance and heat resistance of the coating films are evaluated. Further, with respect to the coating film-attached test plates II-1 to II-3, the weather resistance test of the coating films are carried out.

[Evaluation methods] (Heat resistance: heat decomposition temperature)

Using a differential thermogravimetric measuring apparatus TG/DTA220 (manufactured by Seiko Instruments Inc.), a thermogravimetric analysis is carried out under such conditions that the temperature raising rate is 10°C/min and the nitrogen flow rate is 50 mL/min, and the heat decomposition temperature of a coating film is measured. Here, the temperature at the time when the mass of the coating film has decreased by 5% is taken as the heat decomposition temperature (°C). The measured results are evaluated in accordance with the following standards.

"○": At least 250°C
"Δ": 150 to 250°C
"×": Lower than 150°C

(Hardness)

The hardness of a coating film is measured by a method in accordance with JIS K5600-5-4 (1999), and evaluation is made in accordance with the following standards.

"○": At least pencil hardness H
"Δ": Pencil hardness 2B to F
"×": Pencil hardness 3B or less

(Water resistance)

A water resistance test of a coating film is carried out by a method in accordance with JIS K5600-6-2 (1999), and evaluation is made in accordance with the following standards.

"O": Swelling, damages, etc. are not observed in the coating film.

"✕": Swelling, damages, etc. are observed in the coating film.

(Weather resistance)

A coating film-attached test plate is set outdoors in Naha city, Okinawa Prefecture, Japan, and the gloss of the surface of the coating film is measured by means of PG-1M (gloss meter manufactured by Nippon Denshoku Industries Co., Ltd.) immediately before the setting and after 2 years. The proportion of the value of gloss after 2 years based on the value of gloss immediately before the setting being 100% is calculated as the gloss retention (unit: %), and the weather resistance is evaluated in accordance with the following standards.

"O": The gloss retention rate being at least 80%.
"Δ": The gloss retention rate being at least 60% and less than 80%.
"✕": The gloss retention rate being less than 60%.

The evaluation results are shown in Table 1.

[Table 1]

|  | Ex. 1 | Ex. 2 | Comp. Ex. 1 |
|---|---|---|---|
| Coating composition used | 1-A | 1-B | 2-B |
| Hardness | ○ | ○ | Δ |
| Water resistance | ○ | ○ | ○ |
| Heat resistance | ○ | ○ | ○ |
| Weather resistance | ○ | ○ | ✕ |

As shown in Table 1, the coating film in Example 1 formed by the coating composition of the present invention is excellent in the scratch resistance. Further, it is excellent also in heat resistance with a high heat decomposition temperature, and is excellent also in water resistance. Further, in the weather resistance test, the gloss of the aluminum plate having the coating film formed thereon is maintained at a high level, and therefore, it has excellent weather resistance. Further, also the coating film in Example 2 employing the coating composition having a pigment component added, is likewise excellent in scratch resistance, heat resistance, water resistance and weather resistance.
Further, the coating films in Examples 1 and 2 are superior in the scratch resistance as compared with the coating film in Comparative Example 1 formed by the coating composition (2B) wherein the solvent is cyclohexanone, and their weather resistance is also superior.

<Production and evaluation of solar heat-collecting reflective mirrors>

[Example 3]

On one surface of a glass substrate, silver plating treatment was applied so that the thickness became 800 mg/m$^2$, then on such a silver plated film, a lead-free epoxy resin type back coating material for a mirror ("SM tradename "COAT DF" manufactured by Dai Nippon Toryo Company, Limited) was applied by a curtain flow coater so that the film thickness of a dried coating film would be 30 μm and cured in a drying furnace at 180°C. Thereafter, it was cooled to room temperature in an annealing furnace to obtain a corrosion-preventive coating film-attached reflective mirror.
Then, on the corrosion-preventive coating film of the corrosion-preventive film-attached reflective mirror, the coating composition 1A was applied so that the dried film thickness would be 5 μm and dried and cured for 10 minutes in an oven at 200°C. With respect to the obtained solar heat-collecting reflective mirror, an accelerated weather resistance test and a real exposure test were carried out.

[Comparative Example 2]

Silver plating treatment was applied to one surface of a glass substrate so that the thickness would be 800 mg/m$^2$, and then, on the silver plated film, a lead-free epoxy resin type back coating material for a mirror (SM tradename "COAT DF" manufactured by Dai Nippon Toryo Company, Limited) was applied by a curtain flow coater so that the film thickness of a dried coating film would be 60 $\mu$m and cured in a drying furnace at 180°C. Thereafter, it was cooled to room temperature in an annealing furnace to obtain a corrosion-preventive coating film-attached reflective mirror. With respect to the obtained solar heat-collecting reflective mirror, an accelerated weather resistance test and a real exposure test were carried out.

[Evaluation methods]

(Accelerated weather resistance test)

Using Accelerated Weathering Tester (model: QUV/SE manufactured by Q-PANEL LAB PRODUCTS), the gloss retention rate of a coating film, the presence or absence of peeling of a coating film, and the abnormality of the reflective silver layer were evaluated by comparing the initial stage and after exposure for 5,000 hours.

1. Gloss retention rate of coating film

The gloss of a coating film surface was measured by means of PG-1 M (gloss meter manufactured by Nippon Denshoku Industries Co., Ltd.), and the weather resistance was evaluated in accordance with the following standards.

"○": The gloss retention rate was at least 80%.
"Δ": The gloss retention rate was at least 60% and less than 80%.
"×": The gloss retention rate was less than 60%.

2. Presence or absence of peeling of coating film

The weather resistance was evaluated in accordance with the following standards.

"○": No peeling of the coating film was observed.
"×": Peeling of the coating film was observed.

3. Abnormality of reflective silver layer

The weather resistance was evaluated in accordance with the following standards.

"○": A decrease in reflectance of the mirror due to silver sink, rusting, etc. was not observed.
"×": A decrease in reflectance of the mirror due to silver sink, rusting, etc. was observed.

(Real exposure test)

The obtained solar heat-collecting reflective mirror was set outdoors in Naha city, Okinawa Prefecture, Japan, and the gloss retention rate of the coating film, the presence or absence of peeling of the coating film and abnormality of the reflective silver layer were evaluated by comparing immediately before the setting with after 1 year.

1. Gloss retention rate of coating film

The gloss of a coating film surface was measured by means of PG-1 M (gloss meter manufactured by Nippon Denshoku Industries Co., Ltd.), and the weather resistance was evaluated in accordance with the following standards.

"O": The gloss retention rate was at least 80%.
"Δ": The gloss retention rate was at least 60% and less than 80%.
"×": The gloss retention rate was less than 60%.

2. Presence or absence of peeling of coating film

The weather resistance was evaluated in accordance with the following standards.

"O": No peeling of the coating film was observed.
"×": Peeling of the coating film was observed.

3. Abnormality of reflective silver layer

The weather resistance was evaluated in accordance with the following standards.

"○": A decrease in reflectance of the mirror due to silver sink, rusting, etc. was not observed.

"✕": A decrease in reflectance of the mirror due to silver sink, rusting, etc. was observed.

[Table 2]

|  | Ex. 3 | Comp. Ex. 2 |
|---|---|---|
| (Accelerated weather resistance test) |  |  |
| 1. Gloss retention rate of coating film | ○ | ✕ |
| 2. Presence or absence of peeling of coating film | ○ | ✕ |
| 3. Abnormality of reflective silver layer | ○ | ✕ |
| (Real exposure test) |  |  |
| 1. Gloss retention rate of coating film | ○ | ✕ |
| 2. Presence or absence of peeling of coating film | ○ | ✕ |
| 3. Abnormality of reflective silver layer | ○ | ✕ |

INDUSTRIAL APPLICABILITY

The coating composition for coating the surface of the present invention can be used for the production of a solar heat-collecting reflective plate.

The entire disclosure of Japanese Patent Application No. 2010-095370 filed on April 16, 2010 including specification, claims, drawings and summary is incorporated herein by reference in its entirety.

REFERENCE SYMBOLS

1 A, 1 B, 2A, 2B: solar heat-collecting reflective plate, 11: reflective substrate, 11 a: light incoming/outgoing surface, 11b: non-incoming/outgoing surface, 12, 13: coating film, 21: reflective substrate, 21 a: glass substrate, 21b: reflective metal layer, 21 c: light incoming/outgoing surface

**Claims**

1. A coating composition for coating the surface of a solar heat-collecting reflective plate, which comprises a fluorinated copolymer having repeating units derived from ethylene and repeating units derived from tetrafluoroethylene, and a solvent capable of dissolving the fluorinated copolymer at a temperature of not higher than the melting point of the fluorinated copolymer.

2. The coating composition for coating the surface of a solar heat-collecting reflective plate according to Claim 1, wherein the proportion of repeating units derived from monomers other than ethylene and tetrafluoroethylene in all repeating units in the fluorinated copolymer, is from 0.1 to 30 mol%.

3. The coating composition for coating the surface of a solar heat-collecting reflective plate according to Claim 1 or 2, wherein the fluorinated copolymer is a fluorinated copolymer having crosslinkable groups.

4. The coating composition for coating the surface of a solar heat-collecting reflective plate according to any one of Claims 1 to 3, wherein the solvent is made of a fluorinated aromatic compound.

5. The coating composition for coating the surface of a solar heat-collecting reflective plate according to any one of Claims 1 to 3, wherein the solvent is made of a hydrofluoroether or a hydrofluorocarbon.

**6.** The coating composition for coating the surface of a solar heat-collecting reflective plate according to any one of Claims 1 to 3, wherein the solvent is made of an aliphatic compound having at least one of a carbonyl group and a nitrile group.

**7.** The coating composition for coating the surface of a solar heat-collecting reflective plate according to any one of Claims 1 to 6, wherein the content of fluorine atoms in the solvent is from 5 to 75 mass%.

**8.** A process for producing a coating composition for coating the surface of a solar heat-collecting reflective plate, which comprises a dissolving step of dissolving a fluorinated copolymer having repeating units derived from ethylene and repeating units derived from tetrafluoroethylene in a solvent capable of dissolving the fluorinated copolymer at a temperature of not higher than the melting point of the fluorinated copolymer.

**9.** The process for producing a coating composition for coating the surface of a solar heat-collecting reflective plate according to Claim 8, wherein the dissolution temperature in the dissolving step is a temperature lower by at least 30°C than the melting point of the fluorinated copolymer.

**10.** A process for producing a solar heat-collecting reflective plate, which comprises applying the coating composition for coating the surface of a solar heat-collecting reflective plate as defined in any one of Claims 1 to 7 on at least one surface side of a reflective substrate made of metal to form an applied layer, followed by drying to form a coating film.

**11.** A solar heat-collecting reflective plate which comprises a reflective substrate made of metal and a coating film provided on at least one surface side of the reflective substrate, wherein the coating film is a coating film formed from the composition for coating the surface of a solar heat-collecting reflective plate as defined in any one of Claims 1 to 7.

**12.** The solar heat-collecting reflective plate according to Claim 11, wherein the reflective substrate made of metal is a metal substrate made of aluminum or an aluminum alloy, of which the light-incoming/outgoing surface side is mirror-finished, or in which a reflective metal layer is formed on the light-incoming/outgoing surface side of the metal substrate.

**13.** A process for producing a solar heat-collecting reflective plate, which comprises applying the coating composition for coating the surface of a solar heat-collecting reflective plate as defined in any one of Claims 1 to 7 on at least one surface side of a reflective substrate comprising a glass substrate and a reflective metal layer provided on the opposite side of a light-incoming/outgoing surface of the glass substrate, to form an applied layer, followed by drying to form a coating film.

**14.** A solar heat-collecting reflective plate which comprises a reflective substrate comprising a glass substrate and a reflective metal layer provided on the opposite side of a light-incoming/outgoing surface of the glass substrate, and a coating film provided on at least one surface side of the reflective substrate, wherein the coating film is a coating film formed from the coating composition for coating the surface of a solar heat-collecting reflective plate as defined in any one of Claims 1 to 7.

**15.** The solar heat-collecting reflective plate according to Claim 14, wherein the reflective metal layer is made of silver.

Fig. 1

Fig. 2

Fig. 3

Fig. 4

## INTERNATIONAL SEARCH REPORT

| | International application No. |
|---|---|
| | PCT/JP2011/059305 |

A.    CLASSIFICATION OF SUBJECT MATTER
*C09D127/18*(2006.01)i, *C09D5/33*(2006.01)i, *C09D7/12*(2006.01)i, *C09D123/08*
(2006.01)i, *F24J2/10*(2006.01)i

According to International Patent Classification (IPC) or to both national classification and IPC

B.    FIELDS SEARCHED

Minimum documentation searched (classification system followed by classification symbols)
C09D127/18, C09D5/33, C09D7/12, C09D123/08, F24J2/10

Documentation searched other than minimum documentation to the extent that such documents are included in the fields searched
Jitsuyo Shinan Koho            1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| Y | JP 50-138047 A   (Asahi Glass Co., Ltd.), 04 November 1975 (04.11.1975), claims; page 2, upper left column, line 8 to upper right column, line 16; page 2, lower left column, lines 3 to 7; examples 1 to 7 (Family: none) | 1-15 |
| Y | JP 58-64452 A   (Matsushita Electric Industrial Co., Ltd.), 16 April 1983 (16.04.1983), claims; examples (Family: none) | 1-15 |
| Y | JP 5-280807 A   (Aisin Seiki Co., Ltd.), 29 October 1993 (29.10.1993), claims 1, 2; paragraphs [0009], [0010]; fig. 2 (Family: none) | 1-15 |

☒    Further documents are listed in the continuation of Box C.            ☐    See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 09 May, 2011 (09.05.11) | 17 May, 2011 (17.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | **INTERNATIONAL SEARCH REPORT** | International application No. |
|---|---|---|
| | | PCT/JP2011/059305 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 61-218609 A  (Daikin Industries, Ltd.),<br>29 September 1986 (29.09.1986),<br>claims; examples 1 to 21<br>(Family: none) | 1-15 |
| A | JP 2000-129193 A  (Asahi Glass Co., Ltd.),<br>09 May 2000 (09.05.2000),<br>claims 1 to 9; synthesis examples 1 to 9;<br>examples 1 to 9<br>& US 6610788 B1          & WO 2000/011094 A1 | 1-15 |

Form PCT/ISA/210 (continuation of second sheet) (July 2009)

**INTERNATIONAL SEARCH REPORT**

International application No.

PCT/JP2011/059305

With respect to scope of search:

In respect of the solvent set forth in claims 1, 4 - 7, it is set forth in examples in the description that only a linear ketone having 3 to 10 carbon atoms is used as the solvent.  Consequently, the solvent set forth in claims 1, 4 - 7 cannot be considered to be fully supported by the description.
Therefore, this search has been carried out chiefly within the scope specifically disclosed in the description on the assumption that the solvent set forth in claims 1, 4 - 7 is "a linear ketone having 3 to 10 carbon atoms".

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58064452 A
- JP 2003532925 A
- JP 2007045849 A
- JP 10033333 A
- JP 2010095370 A

**Non-patent literature cited in the description**

- Hansen Solubility Parameter: A Users Handbook. CRC Press, 2007